# EUROPÄISCHE PATENTANMELDUNG

(11) **EP 3 421 853 A1**
(43) Veröffentlichungstag der Anmeldung: **02.01.2019**
(21) Anmeldenummer: 17179101.5
(22) Anmeldetag: 30.06.2017
(51) Int. Cl.: F16K 51/02, F16K 15/03, F16K 37/00, F16K 3/02, F16K 3/04, F16K 3/18

(54) **VAKUUMVENTIL MIT AKUSTISCHEM SENSOR**

(71) Anmelder: VAT Holding AG, 9469 Haag (CH)
(72) Erfinder: Eschenmoser, Adrian, CH-9472 Grabs (CH); Gahler, Andre, CH-9473 Gams (CH); Zickar, Michael, CH-9032 Englburg (CH)
(74) Vertreter: Kaminski Harmann

(57) **Zusammenfassung**

Die Erfindung betrifft ein Vakuumventil (1') mit mindestens einem akustischen Sensor (10), wobei der akustische Sensor (10) derart ausgebildet ist, dass durch den akustischen Sensor (10) eine Information über eine in zumindest einer Komponente des Vakuumventils (1') auftretende Körperschallwelle als Messsignal erzeugbar.

## Beschreibung

Die Erfindung betrifft ein Vakuumventil mit einer Sensoranordnung mit mindestens einem akustischen Sensor.

Allgemein sind Vakuumventile zur Regelung eines Volumen- oder Massenstroms und/oder zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente in einer Vakuumkammer zum Einsatz kommen, muss eine entsprechende Abdichtwirkung auch für solche Prozesskammern verlässlich gewährleistet sein. Hierfür ist insbesondere der Zustand eines Dichtmaterials oder einer bei Verpressung mit dem Dichtmaterial in Kontakt stehenden Dichtfläche von Bedeutung. Im Verlauf der Betriebsdauer eines Vakuumventils können typischerweise Abnutzungen des Dichtmaterials oder der Dichtflächen auftreten.

Um eine dabei eventuell entstehende Undichtigkeit zu vermeiden oder die Qualität der Dichtung auf einem konstant ausreichend hohen Niveau zu halten, wird ein Ventilverschluss typischerweise in bestimmten zeitlichen Abständen ausgetauscht bzw. erneuert. Ein solcher Wartungszyklus bemisst sich dabei meist an der Anzahl der zu erwartenden Öffnungs- und Schliesszyklen in einem bestimmten Zeitraum. Die Wartung erfolgt also meist vorsorglich um das Eintreten einer Undichtigkeit vorab weitestgehend ausschliessen zu können.

Ein solches Instandhaltungserfordernis beschränkt sich nicht allein auf das Dichtmaterial oder den Ventilteller, sondern erstreckt sich insbesondere ebenso auf den Ventilsitz, der einen zum Ventilteller korrespondierenden Teil des Vakuumventils bildet. Die Struktur einer Dichtfläche seitens des Ventilsitzes, z.B. einer in den Ventilsitz eingelassenen Nut, ist von einer mechanischen Beanspruchung ebenso betroffen. Daher kann auch eine aus einem Betrieb des Ventils resultiere strukturelle Veränderung der Nut eine Beeinträchtigung der Dichtung bewirken. Auch hierfür sind üblicherweise entsprechende Wartungsintervalle definiert.

Ein Nachteil dieser Ventilwartung liegt in deren vorsorglichem Charakter. Die von der Wartung betroffenen Teile werden zumeist vor Ablauf deren regulärer oder tatsächlicher Lebensdauer erneuert oder ersetzt. Jeder derartige Wartungsschritt bedeutet in der Regel eine gewisse Stillstandszeit für einen Produktionsprozess und einen erhöhten technischen und finanziellen Aufwand. Dies bedeutet dann in Summe einen Stillstand der Produktion in Abständen, die kürzer sind als erforderlich, und häufiger als dies überhaupt notwendig wäre.

Zudem werden typischerweise Teile des Ventils, z.B. die Antriebseinheit, nicht im Rahmen einer turnusmässigen und vorsorglichen Wartung ausgetauscht oder erneuert. Selbst wenn eine solche Komponente jedoch regelmässig erneuert würde, so bleibt diese auch im Quasi-Neuzustand allfälligen äusseren sowie inneren Einflüssen ausgesetzt, wodurch beispielsweise unerwünschte Veränderungen der Ventilsteuerung auftreten können. Z.B. kann eine hierdurch bewirkte Abweichung eines Verstellwegs für den Ventilverschluss dazu führen, dass eine Soll-Dichtwirkung nicht mehr erreicht werden kann. Allfällige strukturelle Defekte, z.B. Risse, können ebenso zu einer Beeinträchtigung der Dichtfunktion führen.

Der Erfindung liegt somit die Aufgabe zugrunde, ein verbessertes Vakuumventil bereitzustellen, welches eine optimierte Ventilwartung und damit eine Verbesserung, d.h. Verkürzung, von allfälligen Prozessstillständen, erlaubt.

Eine weitere Aufgabe der Erfindung ist es ein solches Ventilsystem bereitzustellen, mit dem eine zuverlässigere gasdichte Abdichtung eines Prozessvolumens erreicht werden kann, insbesondere wobei die Qualität der Abdichtung prognostizierbar und/oder überwachbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gemäss der vorliegenden Erfindung werden ein Vakuumventil und ein akustischer Sensor kombiniert und dabei so ausgestaltet, dass durch die Kombination eine Überwachung und/oder Zustandserkennung des Vakuumventils oder zumindest von Teilen des Ventils erfolgen kann. Mit dem Sensor können zeit- und/oder frequenzabhängige Messsignale erfasst werden, mit welchen wiederum eine Zustandsinformation hinsichtlich des Vakuumventils abgeleitet werden kann.

Der akustische Sensor ist typischerweise zur Aufnahme einer Schallwelle, insbesondere einer Körper- bzw. Oberflächenschallwelle, ausgebildet. Derartige Akustiksensoren sind aus dem Stand der Technik weithin bekannt. Als geeignete Schallaufnehmer sind beispielsweise Sensortypen mit einer schallsensitiv schwingenden Membran oder piezoelektrische, elektrostatische, elektrodynamische oder elektromagnetische Sensoren denkbar, die auf ein zu messendes Bauteil aufgebracht werden können. Der Sensor kann z.B. aufgeklebt, geschweisst gelötet oder verschraubt sein.

Der Sensor kann insbesondere als Körperschallmikrofon oder Schallpegel- oder Schalldruckmesser ausgebildet sein.

Alternativ können auch optisch und kontaktlos messende Akustiksensoren eingesetzt werden.

Damit kann eine Schallausbreitung in einem Vakuumventil erfasst und charakterisiert und folglich der Zustand des Vakuumventils anhand der erfassbaren Daten überwacht und fortlaufend bewertet werden. Mittels der so erzeugbaren Daten kann ein Wartungs- bzw. Austauschzeitpunkt einzelner Komponenten, beispielsweise des Schmierfettes im Antrieb oder des Dichtmaterials, bestimmt werden.

Zum Beispiel kann somit ein Versagen der Dichtigkeit des Ventils weitgehend vorhergesagt und eine zeitlich oder örtlich punktuell abgestimmte Gegenmassnahme empfohlen oder eingeleitet werden. Wartungsintervalle sind dadurch besser planbar und effizienter durchführbar, wobei gleichzeitig die Prozessintegrität gewahrt und gesichert bleibt.

Als relevante Zustandsinformation des Vakuumventils kann z.B. ein Schallausbreitungsverhalten von Teilen des Antriebes, eines elastomeren Dichtmaterials oder einer Dichtfläche betrachtet werden.

Die Erfindung betrifft also ein Vakuumventil, insbesondere ein Vakuumschieberventil, Pendelventil oder Monoventil, zur Regelung eines Volumen- oder Massenstroms und/oder zum gasdichten Unterbrechen eines Fliesswegs. Das Ventil weist einen Ventilsitz auf, der eine eine Öffnungsachse definierende Ventilöffnung und eine die Ventilöffnung umlaufende erste Dichtfläche aufweist. Zudem verfügt das Ventil über einen Ventilverschluss, der z.B. als Ventilteller ausgebildet ist, zur Regelung des Volumen- oder Massenstroms und/oder zur Unterbrechung des Fliesswegs, mit einer zu der ersten Dichtfläche korrespondierenden zweiten Dichtfläche.

Eine mit dem Ventilverschluss gekoppelte Antriebseinheit ist ferner derart ausgebildet, dass der Ventilverschluss zur Bereitstellung von jeweiligen Ventilöffnungszuständen definiert variierbar und einstellbar ist und von einer Offenposition, in welcher der Ventilverschluss die Ventilöffnung zumindest teilweise freigibt, in eine Schliessposition, in welcher die zweite Dichtfläche in Richtung der ersten Dichtfläche gedrückt wird und die Ventilöffnung, insbesondere mittels einer dazwischen liegenden Dichtung, im Wesentlichen gasdicht verschlossen ist, und zurück verstellbar ist.

Das Vakuumventil weist mindestens einen akustischen Sensor auf, wobei der akustische Sensor derart ausgebildet und angeordnet ist, dass mittels des akustischen Sensors eine akustische Information bezüglich einer in zumindest einer Komponente (z.B. Antriebseinheit, Ventilverschluss, Ventilsitz, erste und/oder zweite Dichtfläche) des Vakuumventils auftretenden, erzeugten bzw. sich ausbreitenden Körperschallwelle als Messsignal erzeugbar ist.

Die Information kann in Form eines einzelnen Schallereignisses oder einer Serie von auftretenden Schallphänomenen erfasst werden. Insbesondere kann damit eine einzelne Überschreitung eines vordefinierten Schwellwertes erkannt und angezeigt werden. Alternativ oder zusätzlich kann eine fortlaufende Aufzeichnung des Körperschallverhaltens erfolgen und auf dieser Basis eine Bewertung des Ventilzustandes erfolgen. Ferner kann besagte Information mit ausschliesslichem Bezug zu einer bestimmten Ventilkomponente erzeugt werden oder mit globalem Charakter Aufschluss über einen Gesamtventilzustand geben.

Generell kann durch einen Vergleich einer aktuell erfassten Akustikinformation mit einem gespeicherten Soll- oder Referenzzustand eine Bewertung des Ventilzustandes oder Ventilverhaltens erfolgen.

Der Akustiksensor muss nicht notwendigerweise an jener Komponente angeordnet sein, für die die akustische Information abgeleitet wird. Beispielsweise kann bei einer bekannten Ausgestaltung des Ventils eine Art der Schallübertragung zwischen Komponenten ebenso bekannt sein und damit einen Rückschluss auf eine vom Sensor entfernte Komponente erfolgen. Optisch messende Sensoren müssen gattungsgemäss nicht an dem zu messenden Bauteil angeordneten sein.

In einer jeweiligen Ausführungsform kann der akustische Sensor an der Antriebseinheit, an dem Ventilverschluss oder dem Ventilsitz angeordnet sein. Es versteht sich, dass mehr als ein einzelner Sensor an dem Ventil oder an dessen Komponenten gleichzeitig angeordnet sein können und damit Messsignale für mehrere Messpunkte verfügbar und weiterverarbeitbar sind. Eine entsprechende Sensoranordnung mit mindestens zwei Sensoren, die separat an unterschiedlichen Stellen platziert sein können, ist somit ebenfalls Gegenstand der Erfindung.

Gemäss einer bestimmten Ausführung verfügt das Vakuumventil über ein Ventilgehäuse und der akustische Sensor ist an dem Ventilgehäuse angeordnet. Hierdurch kann eine Entstehung und Ausbreitung einer Körperschallwelle in dem Ventilgehäuse erfasst werden. Mittels solch einer Platzierung des Sensors können nicht nur akustische Ereignisse erfasst werden, die seitens des Sensors entstehen, sondern es können zudem externe, z.B. durch eine mit dem Vakuumventil verbundene Komponente erzeugte, Akustikeffekte detektiert werden. Prinzipiell kann mit dem Sensor der Zustand des Ventils, insbesondere des Gehäuses, überwacht werden. Verändert sich beispielsweise die Struktur des Gehäuses, bildet sich also z.B. ein Riss im Gehäuse, so ergibt sich damit auch eine Veränderung des Schallausbreitungsverhaltens oder des Schallentstehungsverhaltens am Ventilgehäuse. Dies kann mit dem Sensor durch Vergleich mit früheren Messungen oder gespeicherten Sollschallverhalten festgestellt werden. Durch Bereitstellung einer entsprechenden akustischen oder visuellen Ausgabeinformation (z.B. Alarmsignal) kann ferner eine Reaktion für dieses Ereignis herbeigeführt werden.

In einer Ausführungsform weist das Vakuumventil eine Verarbeitungs- und Steuereinheit auf, die zumindest zur Verarbeitung des Messsignals ausgebildet ist. Die Verarbeitungs- und Steuerungseinheit kann ferner zur Ansteuerung der Antriebseinheit und damit zur Steuerung einer Hauptventilfunktion vorgesehen sein.

Erfindungsgemäss kann die Verarbeitungs- und Steuereinheit dazu ausgebildet sein, die Antriebseinheit mit Steuerwerten zur Verstellung des Ventilverschlusses zwischen der Offenposition und der Schliessposition anzusteuern und die Steuerwerte in Abhängigkeit von dem aktuell erfassten Messsignal automatisch einzustellen. Beispielsweise kann bei einem Abhören eines Schliessgeräusches z.B. an der Dichtung des Ventilsitzes erkannt werden, dass der gewünschte Anpressdruck (noch) nicht erreicht ist. Die Antriebseinheit kann daraufhin so an- bzw. nachgesteuert werden, dass das Anpressgeräusch einem Sollgeräusch, welches charakteristisch für einen Soll- Anpressdruck ist, entspricht.

In einer Ausführung kann die Verarbeitungs- und Steuereinheit derart ausgebildet sein, dass das erfasste Messsignal mittels der Verarbeitungs- und Steuereinheit verarbeitbar ist und anhand des erfassten Messsignals eine Zustandsinformation für die zumindest eine Komponente des Vakuumventils erzeugbar ist, insbesondere wobei basierend auf einem Abgleich der Zustandsinformation mit einem vordefinierten Sollmerkmal ein Ausgabesignal bereitgestellt werden kann.

Das Messsignal kann z.B. hinsichtlich einer maximalen Amplitude oder einem erfassten Frequenzbereich analysiert werden. Zudem kann eine Dauer für ein auftretendes Körperschallereignis in Verbindung mit den dabei auftretenden Frequenzen und deren Ausprägung (Amplitude) berücksichtigt werden um die Zustandsinformation abzuleiten. Bestimmte bekannte Frequenzen können z.B. auf in Verbindung stehende negative Einflüsse auf die Funktion des Ventils hindeuten.

Insbesondere kann die Zustandsinformation bezüglich einer mechanischen und/oder strukturellen Integrität der Antriebseinheit, der ersten oder zweiten Dichtfläche, der Dichtung (Dichtmaterial) und/oder des Ventilgehäuses bereitgestellt werden. Die Zustandsinformation kann dabei mittels eines Ist-Soll-Vergleichs für das erfasste Messsignal erzeugt sein.

In einer Ausführungsform der Erfindung kann die Verarbeitungs- und Steuereinheit dazu ausgebildet sein, basierend auf einer Erfassung des Messsignals während eines bestimmten Zeitraums ein Frequenzspektrum bereitzustellen. Hierbei kann z.B. ein gemessener Schalldruck über zugeordnete Frequenzen aufgetragen werden und anhand einer solchen Darstellung oder Auswertung eine Bewertung (automatisch oder durch einen Benutzer) eines Ventil- oder Komponentenzustands vorgenommen werden.

In einer Ausführung kann die Verarbeitungs- und Steuereinheit dazu ausgebildet sein, basierend auf einer Analyse des Messsignals hinsichtlich einer oder mehrerer Messfrequenzen ein Ausgabesignal bezüglich einer Lokalisierung einer die jeweilige Messwertfrequenz verursachenden Körperschallwelle bereitzustellen. Ist beispielsweise bekannt in welchem Frequenzspektrum die Antriebseinheit bei einem Mangel an Schmiermittels Schall emittiert, kann bei einer Detektion von Körperschall in diesem Frequenzbereich auf einen derartigen Schmiermittelmangel geschlossen werden.

Beispielsweise kann die Lokalisierung auch über die Erkennung charakteristischer Frequenzen realisiert werden, indem z.B. niedere Schallfrequenzen auf grössere Bauteile oder auf von aussen eingeleitete Schwingungen und hohe Frequenzen auf kleinere Bauteile schliessen lassen. Durch entsprechende Testdurchführungen, in denen die einzelnen Bauteile jeweils gezielt akustisch angeregt werden, können solche charakteristischen Frequenzen jeweils "erlernt" werden und für die Ausgabesignale als Erkennungsschema dienen.

Gemäss einer Ausführungsform der Erfindung kann die Verarbeitungs- und Steuereinheit eine derart eingerichtete Überwachungsfunktionalität aufweisen, dass bei deren Ausführung das Messsignal während eines Variierens des Ventilöffnungszustands erfasst wird und ein aktueller Funktionszustand für zumindest eine Komponente des Vakuumventils, insbesondere für die Antriebseinheit oder die erste oder die zweite Dichtfläche, basierend auf einem Vergleich des erfassten Messsignals und einem diesbezüglichen Sollmesssignal abgeleitet wird. Eine solche Überwachung kann nicht nur eine aktuelle Einordnung der Ventilfunktion in "gut" oder "nicht mehr gut" erlauben, sondern ermöglicht zudem eine trendmässige Einordnung des aktuellen Ventilzustands zwischen einen Neuzustand und einen notwendigen Wartungszeitpunkt. Hierdurch kann dann abgeschätzt werden, wann eine nächste Wartung des Systems erforderlich wird.

In einer Ausführung kann die Verarbeitungs- und Steuereinheit derart eingerichtet sein, dass anhand des Messsignals ein Schallausbreitungsverhalten bestimmbar und insbesondere mit einem vorbekannten Soll-Schallausbreitungsverhalten vergleichbar ist.

In einer Ausführung kann die Verarbeitungs- und Steuereinheit dazu ausgebildet sein, basierend auf einer Trendüberwachung des Messsignals mehrerer durch das Vakuumventil gesteuerter Prozesse ein Ausgabesignal bereitzustellen, welches eine Warnung über erhöhten Verschleiss einer Komponente des Vakuumventils und/oder eine Vorhersage über die Haltbarkeit einer Komponente des Vakuumventils umfasst.

Eine Warnung über erhöhten Verschleiss einer Komponente des Vakuumventils könnte beispielsweise erfolgen, wenn im Rahmen der Trendüberwachung festgestellt würde, dass festgestellte Schallpegel im System von Prozess zu Prozess schneller anwachsen, als mit einer Toleranzwachstumsrate. Eine Vorhersage über die Haltbarkeit einer Komponente des Vakuumventils könnte beispielsweise erfolgen, indem ein im Rahmen der Trendüberwachung festgestellter Trend eines Amplitudenwachstums von Prozess zu Prozess bestimmt oder durch Interpolation errechnet wird, und die Fortsetzung eines solchen Trends bis zu einer Toleranzgrenze simuliert wird.

In einer Ausführungsform kann der akustische Sensor derart angeordnet und ausgebildet sein, dass durch das Messsignal eine Körperschallwelle erfasst wird, die durch Reibung an zumindest einem der nachfolgend genannten Orte entsteht: zwischen zumindest einem Teil der Dichtung und zumindest einem Teil der ersten Dichtfläche, oder zwischen zumindest einem Teil der Dichtung und zumindest einem Teil der zweiten Dichtfläche.

Der akustische Sensor kann insbesondere derart angeordnet und ausgebildet sein, dass durch das Messsignal eine Körperschallwelle erfasst wird, die in der Antriebseinheit entsteht.

Der Ventilsitz des Vakuumventils kann durch einen Teil des Vakuumventils selbst gebildet werden, insbesondere wobei der Ventilsitz an einem Gehäuse des Vakuumventils ausgebildet ist, oder durch eine Prozesskammer (Kammerwand) bereitgestellt sein.

Das Vakuumventil kann ferner einen von einer äusseren Umgebung abgetrennten Vakuumbereich definieren, und ein zum Messsignal beitragender Akustiksensor kann ausserhalb des Vakuumbereichs angeordnet sein.

Das erfindungsgemässe Vakuumventil wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b: eine mögliche Ausführungsform eines erfindungsgemässen Vakuumventils als Pendelventil;
- Fig. 2a-c: eine mögliche Ausführungsform eines erfindungsgemässen Vakuumventils als Transferventil;
- Fig. 3a,b: eine schematische Darstellung einer erfindungsgemässen Sensoranordnung in einem Transferventil; und
- Fig. 4a,b: eine schematische Darstellung einer weiteren erfindungsgemässen Sensoranordnung in einem Monoventil.

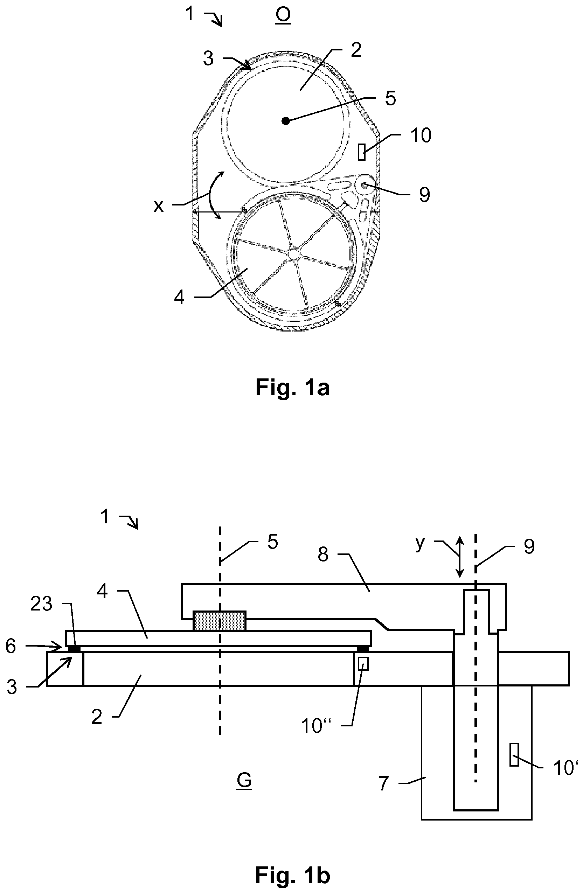

**Figur 1a** und **Figur 1b** zeigen schematisch eine mögliche Ausführungsform des erfindungsgemässen Ventils in Form eines Pendelventils 1. Das Ventil 1 zum Regeln eines Gasflusses und zum im Wesentlichen gasdichten Unterbrechen eines Fliesswegs besitzt ein Ventilgehäuse, welches eine Öffnung 2 aufweist. Die Öffnung 2 hat hier beispielsweise einen kreisrunden Querschnitt. Die Öffnung 2 wird von einem Ventilsitz umschlossen. Dieser Ventilsitz wird von einer axial in Richtung eines Ventiltellers 4 (Ventilverschluss) weisenden und quer zur Öffnungsachse 5 verlaufenden, die Form eines Kreisrings aufweisenden Dichtfläche 3, welche im Ventilgehäuse ausgeformt ist, gebildet. Der Ventilteller 4 ist schwenkbar und im Wesentlichen parallel zur Öffnungsachse 5 verstellbar. In einer Geschlossenstellung G (Fig.1b) des Ventiltellers 4 ist die Öffnung 2 mittels des Ventiltellers 4 gasdicht verschlossen. Eine Offenstellung O des Ventiltellers 4 ist in Fig. 1a veranschaulicht.

Der Ventilteller 4 ist über einen seitlich an dem Teller angeordneten, sich senkrecht zur Öffnungsachse 5 erstreckenden Arm 8 mit einem Antrieb 7 (Antriebseinheit) verbunden. Dieser Arm 8 befindet sich in der Geschlossenstellung G des Ventiltellers 4 ausserhalb des entlang der Öffnungsachse 5 geometrisch projizierten Öffnungsquerschnitts der Öffnung 2.

Der Antrieb 7 ist durch Einsatz eines entsprechenden Getriebes derart ausgebildet, dass der Ventilteller 4 - wie bei einem Pendelventil üblich - mittels einer Schwenkbewegung x des Antriebs 7 quer zur Öffnungsachse 5 und im Wesentlichen parallel über den Querschnitt der Öffnung 2 und senkrecht zur Öffnungsachse 5 um eine Schwenkachse 9 zwischen einer Offenstellung O und einer Zwischenstellung schwenkbar und mittels einer parallel zur Öffnungsachse 5 erfolgenden Längsbewegung y des Antriebs 7 linear verschiebbar ist. In der Offenstellung O, ist der Ventilteller 4 in einem seitlich neben der Öffnung 2 angeordneten Verweilabschnitt positioniert, so dass die Öffnung 2 und der Fliessweg freigegeben sind. In einer Zwischenstellung ist der Ventilteller 4 über der Öffnung 2 beabstandet positioniert und überdeckt den Öffnungsquerschnitt der Öffnung 2. In der Geschlossenstellung ist die Öffnung 2 gasdicht geschlossen und der Fliessweg unterbrochen, indem ein gasdichter Kontakt zwischen dem Ventilverschluss 4 (Ventilteller) und der Dichtfläche 3 des Ventilsitz besteht.

Um ein automatisiertes und geregeltes Öffnen und Schliessen des Ventils 1 zu ermöglichen, sieht das Ventil 1 beispielsweise eine elektronische Verarbeitungs- und Steuerungseinheit vor, die derart ausgebildet ist und mit dem Antrieb 7 in derartiger Verbindung steht, dass der Ventilteller 4 zum gasdichten Abschliessen eines Prozessvolumens oder zum Regeln eines Innendrucks dieses Volumens entsprechend verstellbar ist. Beispielsweise ist die Verarbeitungs- und Steuerungseinheit im Gehäuse des Antriebes 7 integriert oder per Datenkabelanschluss oder Funkverbindung ausgelagert.

Im vorliegenden Ausführungsbeispiel ist der Antrieb 7 als ein Elektromotor ausgebildet, wobei das Getriebe derart umschaltbar ist, dass ein Antreiben des Antriebs 7 entweder die Querbewegung x oder die Längsbewegung y bewirkt. Der Antrieb 7 und das Getriebe werden von der Regelung elektronisch angesteuert. Derartige Getriebe, insbesondere mit Kulissenschaltungen, sind aus dem Stand der Technik bekannt. Weiters ist es möglich, mehrere Antriebe zum Bewirken der Querbewegung x und der Längsbewegung y einzusetzen, wobei die Steuerung die Ansteuerung der Antriebe übernimmt.

Das präzise Regeln bzw. Einstellen des Durchflusses mit dem beschriebenen Pendelventil ist nicht nur durch das schwenkende Verstellen des Ventiltellers 4 zwischen der Offenstellung O und der Zwischenstellung mittels der Querbewegung x, sondern vor allem durch lineares Verstellen des Ventiltellers 4 entlang der Öffnungsachse 5 zwischen der Zwischenstellung und der Geschlossenstellung G mittels der Längsbewegung y möglich. Das beschriebene Pendelventil kann für präzise Regelaufgaben eingesetzt werden.

Sowohl der Ventilteller 4 als auch der Ventilsitz besitzen jeweils eine Dichtfläche 3 und 6 - eine erste und eine zweite Dichtfläche. Die erste Dichtfläche 3 weist zudem eine Dichtung 23 auf. Diese Dichtung 23 kann beispielsweise als Polymer mittels Vulkanisation auf den Ventilsitz aufvulkanisiert sein. Alternativ kann die Dichtung 23 z.B. als O-Ring in einer Nut des Ventilsitzes ausgeführt sein. Auch kann ein Dichtmaterial auf den Ventilsitz aufgeklebt sein und dadurch die Dichtung 23 verkörpern. In einer alternativen Ausführungsform kann die Dichtung 23 seitens des Ventiltellers 4, insbesondere auf der zweiten Dichtfläche 6, angeordnet sein. Auch Kombinationen dieser Ausführungen sind denkbar.

Der Ventilteller 4 wird beispielsweise anhand von Regelgrössen und eines ausgegebenen Steuersignals variabel eingestellt. Als Inputsignal wird zum Beispiel eine Information über einen aktuellen Druckzustand in einem mit dem Ventil verbundenen Prozessvolumen erhalten. Zudem kann dem Regler eine weitere Inputgrösse, z.B. ein Massenzustrom in das Volumen, bereitgestellt werden. Anhand dieser Grössen und anhand eines vorgegebenen Solldrucks, der für das Volumen eingestellt bzw. erreicht werden soll, erfolgt dann eine geregelte Einstellung des Ventils über die Zeit eines Regelzyklus, so dass ein Massenabfluss aus dem Volumen mittels des Ventils 1 über die Zeit geregelt werden kann. Hierzu ist hinter dem Ventil 1 eine Vakuumpumpe vorgesehen, d.h. das Ventil ist zwischen der Prozesskammer und der Pumpe angeordnet. Somit kann ein gewünschter Druckverlauf eingeregelt werden.

Durch die Einstellung des Ventilverschlusses 4 wird ein jeweiliger Öffnungsquerschnitt für die Ventilöffnung 2 eingestellt und damit die mögliche Gasmenge eingestellt, die pro Zeiteinheit aus dem Prozessvolumen evakuiert werden kann. Der Ventilverschluss 4 kann zu diesem Zweck eine von einer kreisrunden Form abweichende Form aufweisen, insbesondere um einen möglichst laminaren Medienfluss zu erreichen.

Zur Einstellung des Öffnungsquerschnitts ist der Ventilteller 4 durch die Steuerungseinheit mittels der Querbewegung x des Antriebs 7 von der Offenstellung O in die Zwischenstellung und mittels der Längsbewegung y des Antriebs 7 von der Zwischenstellung in die Geschlossenstellung G verstellbar. Zum vollständigen Öffnen des Fliesswegs ist der Ventilteller 4 durch die Steuerung mittels der Längsbewegung y des Antriebs 7 von der Geschlossenstellung in der Zwischenstellung und von dort aus mittels der Querbewegung x des Antriebs 7 von der Zwischenstellung in die Offenstellung O verstellbar.

Das Anpressen des Ventiltellers 4 auf den Ventilsitz kann derart erfolgen, dass sowohl die geforderte Gasdichtigkeit innerhalb des gesamten Druckbereichs sichergestellt ist, als auch eine Beschädigung der Dichtung 23 durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers 4 vor.

Besonders bei grossen Druckschwankungen oder dem Wechsel von Unterdruck auf Überdruck, oder umgekehrt, ist eine gleichmässige Kraftverteilung während eines Regelprozess, d.h. einer Variation des Öffnungsquerschnitts, jedoch nicht immer gewährleistbar. Je nach Ventilbeanspruchung werden also beispielsweise die Dichtung 23 (das Dichtmaterial), der Ventilteller 4 und die Dichtflächen 3 und 6 unterschiedlich beansprucht, wodurch sich beispielsweise je nach Ventilbeanspruchung variable effektive Wartungsintervalle ergeben.

Im Stand der Technik wird ein Ventilverschluss typischerweise vorsorglich in festen zeitlichen Abständen ausgetauscht bzw. erneuert, um eine eventuell entstehende Undichtigkeit zu vermeiden oder die Qualität der Dichtung auf einem konstant ausreichend hohen Niveau zu halten. Dies hat unter anderem den Nachteil, dass Ventilteile zumeist vor Ablauf deren regulärer oder tatsächlicher Lebensdauer erneuert oder ersetzt werden.

Gemäss der vorliegenden Erfindung weist das Vakuumventil 1 einen ersten akustischen Sensor 10 auf, der an dem Ventilgehäuse angeordnet ist.

Mit einem solchen Schallemissionssensor 10 können Schallwellen gemessen werden, welche sich in einem metallischen Bauteil wie beispielsweise dem Ventilgehäuse ausbreiten. Wenn Schallwellen in dieses Bauteil eingeleitet oder darin erzeugt werden, wie das z.B. der Fall ist wenn ein Gegenstand auf das mit dem Sensor 10 versehene Teil auftrifft oder darüber reibt, dann können diese vom Sensor gemessen werden. Entsteht innerhalb des Bauteils ein Mikroriss verändert sich dadurch die Wellenausbreitung, was wiederum mittels einer Messung des Sensors 10 festgestellt werden kann.

Durch eine Messstelle am Vakuumgehäuse können somit Schallemissionen gemessen werden, die beim Schliessen des Ventils 1 durch ein Auftreffen der zweiten Dichtfläche 6 auf die erste Dichtfläche 3 bzw. auf die Dichtung 23 freigesetzt werden. Der hierbei erzeugte Schallimpuls kann charakteristische für die verwendete Dichtanordnung sein.

Es kann also der jeweils entstehende Schallimpuls erfasst und mit einem bekannten Referenzschallimpuls (z.B. durch vorangegangene Aufzeichnung) verglichen werden. Anhand dieses Vergleichs kann eine Abweichung von einem Sollzustand erkannt werden. Beispielsweise kann bei einem Auftreten einer veränderte Schallamplitude oder eines akustischen Ereignisses in einem unterschiedlichen Frequenzbereich ein entsprechender Rückschluss auf den Zustand der Dichtung erfolgen.

Der aktuell erfasste Schallimpuls und dessen Abweichung von der Referenz können einen Aufschluss über einen Grad eines Verschleisses (Abnutzung) des Dichtmaterials 23 bereitstellen. Eine solche Abweichung kann eine typischerweise stärkere Ausprägung mit einer Zunahme der Betriebsdauer des Ventils 1 aufweisen. Hierdurch kann der Dichtungszustand fortlaufend überwacht werden und ein Zeitpunkt für ein notwendiges Ersetzen der Dichtung 23 wird prognostizierbar. In anderen Worten ist damit eine Überwachung eines Dichtungsverschleisses ermöglicht. Die Dichtung kann also im Unterschied zum Stand der Technik nach Bedarf und unabhängig von deren Einsatzdauer gewartete werden, ohne dass eine Beeinträchtigung der Ventilfunktion gegeben ist.

Ferner ermöglicht eine entsprechende Analyse des Sensorsignals das Feststellen einer aktuellen Funktionstreue. Durch den auftretenden Körperschall kann festgestellt werden, falls sich das Dichtmaterial 23 (z.B. ein Elastomer) bei einem Schliess- oder Öffnungsvorgang relativ zu zumindest einer der Dichtflächen 3,6 verschiebt (reibt). Durch eine solche Querbeanspruchung könnten unerwünschte Partikel von der Dichtung 23 oder einer Dichtfläche abgelöst werden und beispielsweise ein Prozessvolumen kontaminieren. Das frühzeitige Erkennen einer solchen Fehlfunktion ermöglicht eine entsprechend zeitnahe Reaktion und kann damit einen Produktionsausfall verhindern.

Es ist zudem denkbar, dass für unterschiedliche verwendete Dichtmaterialien entsprechende "Referenzgeräusche" hinterlegt sind. Hierdurch wird zum einen eine Identifikation des eingesetzten Dichtmaterials allein durch eine akustische Analyse z.B. eines Schliessgeräusches möglich. Andererseits kann mit dem Austausch der Dichtung das neu eingesetzte Dichtmaterial ausgewählt und diese Information für die weitere akustische Prozessüberwachung genutzt werden.

Das Vakuumventil 1 weist zwei weitere Akustiksensoren 10' und 10" auf. Der Sensor 10' ist an dem Antrieb 7 vorgesehen und ermöglich dadurch die direkte Erfassung und Analyse von (Körper-)Schallwellen und -impulsen, die durch eine Betätigung des Antriebs 7 hervorgerufen werden können. Auch für solche Verstellbewegungen des Antriebs 7 können jeweilige Referenz-Frequenzspektren vorliegen und ein aktuelles Signal kann damit verglichen werden. Dadurch ist eine Überwachung der Antriebseinheit 7 in Hinblick auf dessen korrekte Funktionsfähigkeit ermöglicht. Eine signifikante Abweichung eines erfassten Körperschallspektrums von einem Referenzspektrum, z.B. in einem bestimmten Mass über einen Toleranzbereich hinaus, kann ein Indikator für eine fehlerbehaftete Tätigkeit des Antriebs 7 sein.

Der akustische Sensor 10" ist nahe an dem Ventilsitz bzw. der ersten Dichtfläche 3 platziert und ermöglicht damit eine unmittelbare Erfassung einer Schallemission mit direktem Bezug zu einem Verschliessen oder Öffnen des Ventils 1. Dieser Sensor 10" kann z.B. ausschliesslich für die Ermittlung eines aktuellen Zustands oder einer Zustandsänderung der Dichtung 23 (des Dichtmaterials) vorgesehen sein.

Eine Bewertung eines Dichtungsverschleisses basiert gegebenenfalls auf Erfahrungswerten oder besagten Referenzaufzeichnungen, für welche die betroffene Ventilkomponente in einem Sollzustand gezielt zur Schallemission angeregt wird.

Zusätzlich oder alternativ könnte ein akustischer Sensor auch an jeder weiteren der gezeigten Komponenten bereitgestellt werden, wobei eine Auswertung der Messwerte dementsprechend anzupassen ist.

Alternativ zu einem Pendelventil wie dargestellt kann die erfindungsgemässe Sensorlösung mit einem anderen Vakuumventiltyp, z.B. einem Klappventil, Schieberventil oder einem sog. Butterfly-Regelventil, realisiert sein. Insbesondere ist das erfindungsgemässe Ventil zum Einsatz im Vakuumbereich ausgebildet. Ferner sind ebenso Pendelventile einsetzbar, deren Verschluss nur in einer Richtung verstellt werden kann.

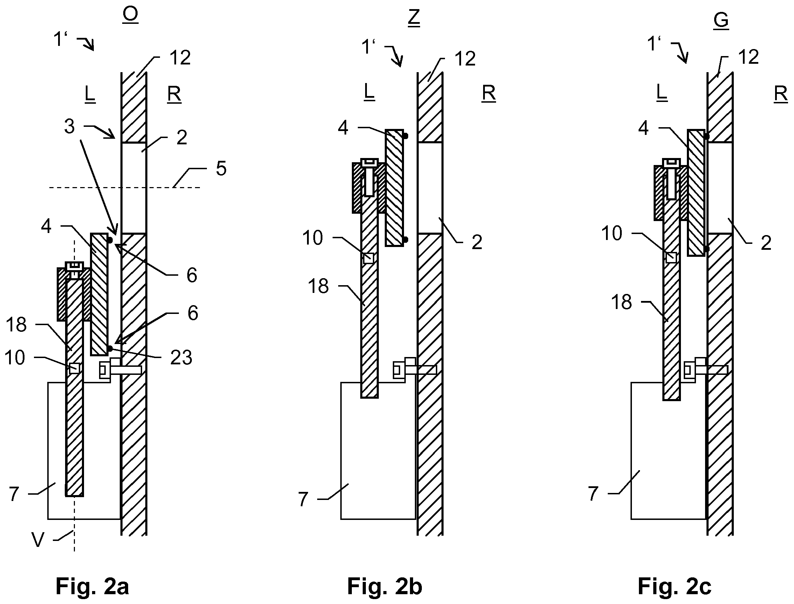

**Figur 2a** bis **Figur 2c** zeigen schematisch eine mögliche Ausführungsform des erfindungsgemässen Ventils 1' in Form eines Transferventils 1', dargestellt in unterschiedlichen Verschlusspositionen. Die in den vorherigen Figuren verwendeten Bezugszeichen gelten hier analog.

Das gezeigte Transferventil 1' ist eine Sonderform eines Schieberventils. Das Vakuumventil hat ein rechteckiges, plattenförmiges Verschlusselement 4 (z.B. Ventilteller), das eine Dichtfläche 6 zum gasdichten Verschliessen einer Öffnung 2 aufweist. Die Öffnung 2 hat einen dem Verschlusselement 4 entsprechenden Querschnitt und ist in einer Wand 12 ausgeformt. Die Öffnung 2 ist von einem Ventilsitz, der seinerseits ebenfalls eine mit der Dichtfläche 6 des Verschlusselements 4 korrespondierende Dichtfläche 3 bereitstellt, umgeben. Die Dichtfläche 6 des Verschlusselements 4 umläuft das Verschlusselement 4 und trägt ein Dichtmaterial 23 (Dichtung). In einer Geschlossenposition werden die Dichtflächen 3 und 6 aufeinander gedrückt und das Dichtmaterial 23 wird zwischen den beiden Dichtflächen 3 und 6 verpresst.

Die Öffnung 2 verbindet einen ersten Gasbereich L, welcher sich in der Figur links der Wand 12 befindet, mit einem zweiten Gasbereich R rechts der Wand 12. Die Wand 12 wird z.B. durch eine Kammerwand einer Vakuumkammer gebildet. Das Vakuumventil wird dann durch ein Zusammenwirken der Kammerwand 12 mit dem Verschlusselement 4 gebildet.

Das Verschlusselement 4 ist an einem Verstellarm 18 angeordnet, der hier beispielsweise stangenförmig ist, und sich entlang einer geometrischen Verstellachse V erstreckt. Der Verstellarm 18 ist mit einer Antriebseinheit 7 mechanisch gekoppelt, mittels welcher das Verschlussglied 4 in dem ersten Gasbereich L links der Wand 12 durch Verstellen des Verstellarms 18 mittels der Antriebseinheit 7 zwischen einer Offenposition O (Fig.2a) über eine Zwischenposition Z (Fig.2b) in eine Geschlossenposition G (Fig.2c) verstellbar ist.

In der Offenposition O befindet sich das Verschlusselement 4 ausserhalb des Projektionsbereichs der Öffnung 2 und gibt diese vollständig frei, wie in Figur 2a gezeigt.

Durch Verstellen des Verstellarms 18 in axiale Richtung parallel zu der Verstellachse V und parallel zu der Wand 12 kann das Verschlusselement 4 mittels der Antriebseinheit 7 von der Offenposition O in die Zwischenposition Z verstellt werden.

In dieser Zwischenposition Z überdeckt das Verschlusselement 4 die Öffnung 2 und befindet sich in beabstandeter Gegenüberlage zum Ventilsitz. Die Dichtflächen 3 und 6 befinden sich ebenfalls in entsprechender Gegenüberlage.

Durch Verstellen des Verstellarms 18 in Richtung quer zur Verstellachse V, also z.B. senkrecht zur Wand 12 und zum Ventilsitz und damit in Richtung der Achse 5, kann das Verschlusselement 4 von der Zwischenposition Z in die Geschlossenposition G (Figur 2c) verstellt werden.

In der Geschlossenposition G verschliesst das Verschlusselement 4 die Öffnung 2 gasdicht und trennt den ersten Gasbereich L von dem zweiten Gasbereich R gasdicht.

Das Öffnen und Schliessen des Vakuumventils erfolgt also mittels der Antriebseinheit 7 durch eine L-förmige Bewegung des Verschlusselements 4 und des Verstellarms 18. Daher wird das gezeigte Transferventil auch L-Typ-Ventil genannt.

Ein Transferventil wie gezeigt wird typischerweise zur Abdichtung eines Prozessvolumens (Vakuumkammer) und zur Be- und Entladung des Volumens vorgesehen. Häufige Wechsel zwischen der Offenposition O und der Geschlossenposition G sind bei einem solchen Einsatz die Regel. Hierdurch können verstärkte Abnutzungserscheinungen der Dichtflächen 3 und 6, der Dichtung 23 und des Antriebes 7 eintreten.

Das Ventil 1' weist erfindungsgemäss einen akustischen Sensor 10 auf. Der Sensor 10 ist an bzw. in der Ventilstange 18 angeordnet und ermöglich damit die Erfassung von Körperschall, der beispielsweise bei einer Bewegung der Stange 18 durch die Antriebseinheit 7 auftritt. Ein den Körperschall bezüglich Art (Frequenz) und Intensität (Amplitude) repräsentierendes Messsignal wird durch den Sensor 10 fortlaufend bereitgestellt. Eine Registrierung des Signals über einen bestimmten Zeitraum hinweg erlaubt zudem eine Erfassung einer Veränderung des Körperschalls. Das erfasste Messsignal kann also insbesondere zeitabhängig aufgezeichnet und anschliessend ausgewertet werden.

Durch die erfindungsgemässe Sensoranordnung mit der Ventilstange 18 kann während eines Ventileinsatzes ein Versagen diverser Bauteile vorhergesagt werden, indem vor irregulären, d.h. insbesondere vor von einer Toleranz abweichenden Schallphänomenen oder vor ungewollten Trends einer Veränderung des Körperschallverhaltens gewarnt wird.

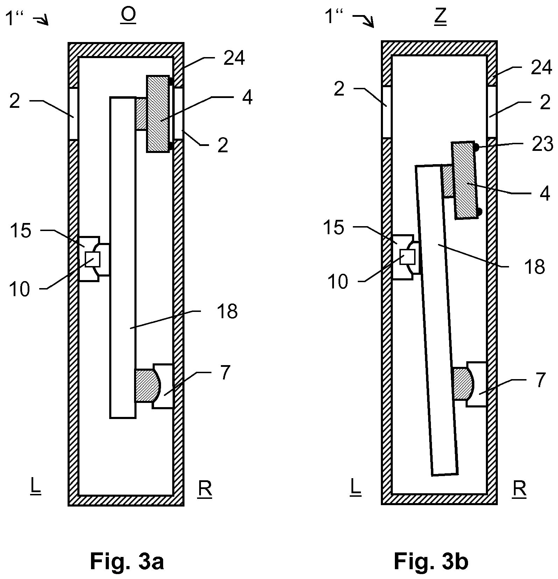

Die **Figuren 3a** und **3b** zeigen schematisch eine weitere mögliche Sensoranordnung in einem erfindungsgemässen Transferventil 1" , dargestellt in einer Geschlossenposition G (Fig.3a) und einer Offenposition O (Fig.3b).

Die in den vorherigen Figuren verwendeten Bezugszeichen gelten hier analog. In den gezeigten Figuren ist der Ventilsitz an einem Gehäuse 24 des Vakuumventils 1" ausgebildet. Für einen Fachmann ist jedoch klar, dass die nachfolgende Beschreibung im Wesentlichen analog auf Ausführungsformen anwendbar ist, wobei der Ventilsitz von einer Prozesskammer, d.h. einem Kammergehäuse, bereitgestellt wird.

Weiterhin versteht es sich von selbst, dass der hier rein schematisch als Kippmechanismus dargestellte Ventilmechanismus nicht einschränkend zu verstehen ist und ein Fachmann die erfinderische Sensoranordnung beispielsweise in analoger Weise auf einen beliebigen L-Motion Antrieb übertragen kann, z.B. einen L-Motion Antrieb mit zwei senkrecht aufeinander stehenden linearen Verstellrichtungen des Ventiltellers.

Zur kontrollierten Führung des Verstellarms 18 weist das Vakuumventil hier beispielsweise eine Führungskomponente 15 auf, wobei die Antriebseinheit 7 und die Führungskomponente 15 jeweils in einer festen Anordnung zueinander stehen, hier beispielsweise dadurch, dass sowohl die Antriebseinheit 7 wie auch die Führungskomponente 15 jeweils ortsfest mit dem Ventilgehäuse 24 verbunden sind. Der Verstellarm 18 ist ferner mit dem Ventilverschluss 4 und der Antriebseinheit 7 mechanisch gekoppelt, wobei durch Verstellen des Verstellarms 18, mittels der Antriebseinheit 7, der Ventilverschluss 4 zwischen der Offenposition O und der Schliessposition G im Wesentlichen parallel zum Ventilsitz verstellbar ist, insbesondere in einer L-Motion Bewegung wie in den Figuren 2a bis 2d beschrieben.

Die Sensoranordnung umfasst erfindungsgemäss und beispielhaft den Akustiksensor 10. Dieser ist an der Führungskomponente 15 vorgesehen und kann derart ausgebildet sein, dass das Messsignal einen Stick-Slip-Effekt an einem der Kopplungsbauteile und/oder im Antrieb 7 erfasst und erkennbar macht. Auch Reibschwingungen an der Dichtung 23 können mit einer solchen Sensoranordnung erfasst werden, wobei auch eine näher an der Dichtung gelegene Anordnung des Sensors 10 hierfür denkbar ist, dies z.B. am Ventilgehäuse 24 nahe dem Ventilsitz.

Der Akustiksensor 10 ermöglicht eine direkte Erfassung einer Körperschallwelle in einem bewegten Teil des Ventils 1". Dadurch kann, beispielsweise basierend auf einem Soll-Ist-Vergleich für das erfasste Messsignal hinsichtlich einer bekannten und üblichen von der Antriebseinheit 7 ausgehenden Schallerzeugung (Schwingung), eine Zustandsinformation für das Vakuumventils 1" abgeleitet werden. Sollten die erfassten Schallwerte in einen Wertebereich gelangen, welcher zuvor als kritisch eingestuft wurde, kann ein Warnsignal bereitgestellt werden.

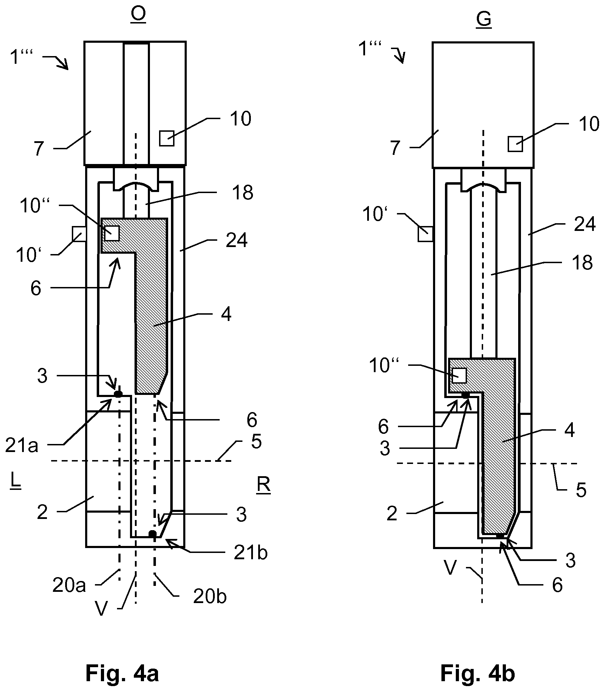

Die **Figuren 4a** und **4b** zeigen weitere Anordnungen von akustischen Sensoren 10-10", hier beispielsweise in einem so genannten Monoventil 1"', dargestellt in einer Geschlossenposition G (Fig.4b) und einer Offenposition O (Fig.4a).

Das Ventil 1"' zum gasdichten Schliessen eines Fliesswegs mittels einer Linearbewegung besitzt ein Ventilgehäuse 24 mit einer Öffnung 2 für den Fliessweg, wobei die Öffnung 2 eine geometrische Öffnungsachse 5 entlang des Fliesswegs aufweist. Das Verschlusselement 4 ist linear entlang einer zu der Öffnungsachse 5 quer verlaufenden, geometrischen Verstellachse V in einer Verschlusselementebene von einer die Öffnung 2 freigebenden, geöffneten Position O in eine über die Öffnung 2 linear geschobene, geschlossene Position G in eine Schliessrichtung und umgekehrt zurück in eine Öffnungsrichtung verschiebbar.

Zum Beispiel umschliesst eine gekrümmte erste Dichtfläche 3 die Öffnung 2 des Ventilgehäuses 24 entlang eines ersten Abschnitts 21a in einer ersten Ebene 20a und entlang eines zweiten Abschnitts 21b in einer zweiten Ebene 20b. Die erste Ebene 20a und die zweite Ebene 20b sind zueinander beabstandet, verlaufen parallel zueinander und parallel zu der Verschlusselementebene. Somit weisen der erste Abschnitt 21a und der gegenüberliegende zweite Abschnitt 21b zueinander einen geometrischen Versatz quer zu der Verstellachse V und in Richtung der Öffnungsachse 5 auf. Zwischen den beiden gegenüberliegenden Abschnitten 21a und 21b in dem sich entlang der Verstellachse V erstreckenden Bereich ist die Öffnung 2 angeordnet.

Das Verschlusselement 4 weist eine zur ersten Dichtfläche 3 korrespondierende zweite Dichtfläche 6 auf, welche entlang zum ersten und zweiten Abschnitt 21a,21b korrespondierender Abschnitte verläuft.

Monoventile 1"', d.h. mittels einer einzigen linearen Bewegung schliessbare Vakuumventile, haben beispielsweise den Vorteil eines vergleichsweise einfachen Schliessmechanismus, z.B. verglichen mit den mittels zweier Bewegungen schliessbaren Transferventilen, die einen verhältnismässig komplex aufgebauten Antrieb erfordern. Da das Verschlusselement 4 zudem einteilig ausgebildet sein kann, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist.

Insbesondere liegt ein Vorteil von Monoventilen beispielsweise darin, dass die Dichtung aufgrund ihres Verlaufs beim Schliessen keiner Querbelastung in Querrichtung zur Längserstreckung der Dichtung unterliegt. Andererseits ist die Dichtung aufgrund Ihrer Quererstreckung zur Öffnungsachse 5 kaum in der Lage, auf das Verschlusselement 4 entlang der Öffnungsachse 5 auftretende Kräfte, die insbesondere bei grossem Differenzdruck auf das Verschlusselement 4 wirken können, aufzunehmen, was einen robusten Aufbau des Verschlusselements 4, dessen Antriebs und dessen Lagerung erfordern kann.

Die Sensoren 10-10" sind an der Antriebseinheit 7, dem Ventilgehäuse 24 und dem Ventilverschluss 4 angeordnet. Somit können entsprechend spezifische Messsignale mit Bezug zu den jeweiligen Ventilkomponenten erfasst werden. Mittels Auswerten der einzelnen Signale können Informationen für die jeweiligen Zustände der einzelnen Komponenten erzeugt werden.

Durch eine Verrechung der Signale oder eine Zusammenschau einzelner Signalauswertungen können Informationen abgeleitete werden, die darüber hinausgehen, wie z.B. eine unmittelbare Auswirkung eines an der Antriebseinheit entstehenden Schallereignisses auf den Ventilverschluss 4. Es kann damit erfasst werden, wie die Schallausbreitung in einem Ventil erfolgt.

Zur Bewertung der Messsignale können die zeitabhängigen Messungen in ein frequenzabhängiges Signal (Frequenzspektrum) umgewandelt werden.

Aufgrund der auftretenden Schallphänomene kann auf den Zustand z.B. des Antriebs 7 geschlossen werden. So kann beispielsweise anhand eines Frequenzspektrums beurteilt werden, ob ein Schmierfett noch eine genügende Konsistenz oder ob es bereits Alterserscheinungen aufweist.

Auch kann im System (z.B. über mehrere Prozesse hinweg) detektiert werden, ob sich das Frequenzspektrum z.B. durch Verschleiss, insbesondere Abrieb in der Antriebseinheit ändert, und/oder wann auf Grundlage eines ermittelten Trends voraussichtlich ein nicht mehr hinnehmbarer Verschleiss eintritt.

Auch können durch Vergleich mit bekannten Referenzspektren Transportschäden, Erdbeben oder Crashs mit dem Ventil oder nahe gelegenen Komponenten im Prozess ermittelt werden, insbesondere wobei Massnahmen ergriffen werden können, z.B. in Form eines Not-Stopp oder einer Verlangsamung des Prozesses.

Es versteht sich, dass diese dargestellten Figuren nur mögliche Ausführungsbeispiele schematisch darstellen. Die verschiedenen Ansätze können ebenso miteinander sowie mit Verfahren und Vorrichtungen des Stands der Technik kombiniert werden.

## Patentansprüche

1. Vakuumventil (1,1',1",1"'), insbesondere Vakuumschieberventil, Pendelventil oder Monoventil, zur Regelung eines Volumen- oder Massenstroms und/oder zum gasdichten Unterbrechen eines Fliesswegs, mit
• einem Ventilsitz, der eine eine Öffnungsachse (5) definierende Ventilöffnung (2) und eine die Ventilöffnung (2) umlaufende erste Dichtfläche (3) aufweist,
• einem Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6), und
• einer mit dem Ventilverschluss (4) gekoppelten Antriebseinheit (7), die derart ausgebildet ist, dass der Ventilverschluss (4)
□ zur Bereitstellung von jeweiligen Ventilöffnungszuständen definiert variierbar und einstellbar ist und
□ von einer Offenposition (O), in welcher der Ventilverschluss (4) die Ventilöffnung (2) zumindest teilweise freigibt, in eine Schliessposition (G), in welcher die zweite Dichtfläche (6) in Richtung der ersten Dichtfläche (3) gedrückt wird und die Ventilöffnung (2), insbesondere mittels einer dazwischen liegenden Dichtung (23), im Wesentlichen gasdicht verschlossen ist, und zurück verstellbar ist,
**dadurch gekennzeichnet, dass**
das Vakuumventil (1,1',1",1"') mindestens einen akustischen Sensor (10,10',10",10"') aufweist, wobei der akustische Sensor (10,10',10",10"') derart ausgebildet und angeordnet ist, dass mittels des akustischen Sensors (10,10',10",10"') eine Information über eine in zumindest einer Komponente des Vakuumventils (1,1',1",1"') auftretende Körperschallwelle als Messsignal erzeugbar ist.

2. Vakuumventil (1,1',1",1"') nach Anspruch 1,
**dadurch gekennzeichnet, dass**
der akustische Sensor (10,10',10",10"') an der Antriebseinheit (7) angeordnet ist.

3. Vakuumventil (1,1',1",1"') nach Anspruch 1 oder 2,
**dadurch gekennzeichnet, dass**
der akustische Sensor (10,10',10",10"') an dem Ventilverschluss (4) oder dem Ventilsitz (3) angeordnet ist.

4. Vakuumventil (1,1',1",1"') nach einem der Ansprüche 1 bis 3,
**dadurch gekennzeichnet, dass**
das Vakuumventil (1,1',1",1"') ein Ventilgehäuse (24) aufweist und der akustische Sensor (10,10',10",10"') an dem Ventilgehäuse (24) angeordnet ist.

5. Vakuumventil (1,1',1",1"') nach einem der Ansprüche 1 bis 4,
**dadurch gekennzeichnet, dass**
das Vakuumventil (1,1',1",1"')eine Verarbeitungs- und Steuereinheit aufweist, die zumindest zur Verarbeitung des Messsignals ausgebildet ist.

6. Vakuumventil (1,1',1",1"') nach Anspruch 5,
**dadurch gekennzeichnet, dass**
die Verarbeitungs- und Steuereinheit dazu ausgebildet ist
• die Antriebseinheit (7) mit Steuerwerten zur Verstellung des Ventilverschlusses (4) zwischen der Offenposition (O) und der Schliessposition (G) anzusteuern, und
• die Steuerwerte in Abhängigkeit von dem aktuell erfassten Messsignal automatisch einzustellen.

7. Vakuumventil (1,1',1",1"') nach Anspruch 5 oder 6,
**dadurch gekennzeichnet, dass**
die Verarbeitungs- und Steuereinheit derart ausgebildet ist, dass das erfasste Messsignal mittels der Verarbeitungs- und Steuereinheit verarbeitbar ist und anhand des erfassten Messsignals eine Zustandsinformation für die zumindest eine Komponente des Vakuumventils (1,1',1",1"') erzeugbar ist, insbesondere wobei basierend auf einem Abgleich der Zustandsinformation mit einem vordefinierten Sollmerkmal ein Ausgabesignal bereitgestellt wird.

8. Vakuumventil (1,1',1",1"') nach Anspruch 7,
**dadurch gekennzeichnet, dass**
die Zustandsinformation bezüglich einer mechanischen und/oder strukturellen Integrität der Antriebseinheit (7), der ersten oder zweiten Dichtfläche, der Dichtung (23) und/oder des Ventilgehäuses (24) bereitgestellt wird, insbesondere wobei die Zustandsinformation mittels eines Ist-Soll-Vergleichs für das erfasste Messsignal erzeugt ist.

9. Vakuumventil (1,1',1",1"') nach einem der Ansprüche 5 bis 8,
**dadurch gekennzeichnet, dass**
die Verarbeitungs- und Steuereinheit dazu ausgebildet ist, basierend auf einer Erfassung des Messsignals während eines bestimmten Zeitraums ein Frequenzspektrum bereitzustellen.

10. Vakuumventil (1,1',1",1"') nach einem der Ansprüche 5 bis 9,
**dadurch gekennzeichnet, dass**
die Verarbeitungs- und Steuereinheit dazu ausgebildet ist, basierend auf einer Analyse des Messsignals hinsichtlich einer oder mehrerer Messfrequenzen ein Ausgabesignal bezüglich einer Lokalisierung einer die jeweilige Messwertfrequenz verursachenden Körperschallwelle bereitzustellen.

11. Vakuumventil (1,1',1",1"') nach einem der Ansprüche 5 bis 10,
**dadurch gekennzeichnet, dass**
die Verarbeitungs- und Steuereinheit eine derart eingerichtete Überwachungsfunktionalität aufweist, dass bei deren Ausführung
• das Messsignal während eines Variierens des Ventilöffnungszustands erfasst wird und
• ein aktueller Funktionszustand für zumindest eine Komponente des Vakuumventils (1,1',1",1"'), insbesondere für die Antriebseinheit (7) oder die erste oder die zweite Dichtfläche, basierend auf einem Vergleich des erfassten Messsignals und einem diesbezüglichen Sollmesssignal abgeleitet wird.

12. Vakuumventil (1,1',1",1"') nach einem der Ansprüche 5 bis 11,
**dadurch gekennzeichnet, dass**
die Verarbeitungs- und Steuereinheit derart eingerichtet ist, dass anhand des Messsignals ein Schallausbreitungsverhalten bestimmbar und insbesondere mit einem vorbekannten Soll-Schallausbreitungsverhalten vergleichbar ist.

13. Vakuumventil (1,1',1",1"') nach einem der Ansprüche 5 bis 12,
**dadurch gekennzeichnet, dass**
die Verarbeitungs- und Steuereinheit dazu ausgebildet ist, basierend auf einer Trendüberwachung des Messsignals mehrerer durch das
Vakuumventil (1,1',1",1"') gesteuerter Prozesse ein Ausgabesignal bereitzustellen, welches eines oder beide von:
• einer Warnung über erhöhten Verschleiss einer Komponente des Vakuumventils (1,1',1",1"'), und
• einer Vorhersage über die Haltbarkeit einer Komponente des Vakuumventils (1,1',1",1"'),
umfasst.

14. Vakuumventil (1,1',1",1"')nach einem der vorhergehenden Ansprüche,
**dadurch gekennzeichnet, dass**
der akustische Sensor (10,10',10",10"') derart angeordnet und ausgebildet ist, dass durch das Messsignal eine Körperschallwelle erfasst wird, die durch Reibung an zumindest einem der nachfolgend genannten Orte entsteht:
• zwischen zumindest einem Teil der Dichtung (23) und zumindest einem Teil der ersten Dichtfläche (3), und
• zwischen zumindest einem Teil der Dichtung (23) und zumindest einem Teil der zweiten Dichtfläche (6).

15. Vakuumventil (1,1',1",1"') nach einem der vorhergehenden Ansprüche,
**dadurch gekennzeichnet, dass**
der akustische Sensor (10,10',10",10"') derart angeordnet und ausgebildet ist, dass durch das Messsignal eine Körperschallwelle erfasst wird, die in der Antriebseinheit (7) entsteht.
